# EUROPÄISCHE PATENTSCHRIFT

(11) **EP 1 321 366 B1**
(45) Veröffentlichungstag und Bekanntmachung des Hinweises auf die Patenterteilung: **27.10.2004**
(21) Anmeldenummer: 02028899.9
(22) Anmeldetag: 23.12.2002
(51) Int. Cl.: B65B 21/12, B65B 21/18, B65G 47/90

(54) **Vorrichtung zur Drehausrichtung von Bügelverschlussflaschen**
Device for rotationally orienting bottles with swing-top closure
Dispositif d'orientation en rotation de bouteilles avec fermeture à étrier

(30) Priorität: 22.12.2001 DE 10163810; 14.06.2002 DE 20209366 U
(43) Veröffentlichungstag der Anmeldung: 25.06.2003
(73) Patentinhaber: Dichtl, Günther, 94034 Passau (DE)
(72) Erfinder: Dichtl, Günther, 94034 Passau (DE)
(74) Vertreter: Gustorf, Gerhard, Dipl.-Ing.

(56) Entgegenhaltungen:
- DE-A- 19 833 807
- DE-U- 20 209 366
- DE-U- 29 911 943

## Beschreibung

Die Erfindung betrifft eine Vorrichtung zur Drehausrichtung von Flaschen mit geöffnetem Bügelverschluß in einem Kasten, umfassend eine vertikal nach oben und unten bewegliche, im wesentlichen rechteckige Grundplatte, in der auf die Flaschenköpfe aufsetzbare Drehköpfe in gleichmäßigen Abständen voneinander gelagert sind.

Getränke, insbesondere Bier oder auch Limonaden, werden in zunehmendem Maße in Flaschen mit Bügelverschlüssen abgefüllt. Die leeren Flaschen werden in Kästen zu je 12, 15, 20 oder 24 Flaschen wieder an die Brauerei oder den Abfüllbetrieb zurückgeführt. Dort werden die geöffneten Flaschen von Packköpfen gemeinsam aus dem Kasten entnommen und über Transportbänder an Reinigungs- und Füllstationen weitergeleitet. Die Packköpfe erfassen dabei mit Greifern die einzelnen Flaschen gemeinsam und heben sie aus dem Kasten heraus. Ein Problem besteht hierbei darin, daß die Kästen im allgemeinen an zwei oder vier Seiten Griffleisten aufweisen, unter denen sich einzelne Bügel verhaken können, welche zufällig in Richtung auf die Griffleiste weisen. Die Folge davon sind Betriebsunterbrechungen, Beschädigungen der Kästen, Deformationen der Bügel und Flaschenbruch.

Zur Lösung dieses Problems werden im einfachsten Fall manuelle Kontrollen durchgeführt, so daß von einer Bedienungsperson die Flaschen von Hand gedreht werden, welche mit ihren Bügelverschlüssen zu den Griffleisten hin weisen. Abgesehen von den erheblichen Personalkosten und dem viel zu hohen Zeitaufwand hat diese Methode den Nachteil, daß die Konzentration der Bedienungsperson stark gefordert ist und nach kurzer Zeit nachläßt.

Es wurde daher versucht, den Vorgang der Flaschendrehung zu automatisieren. Eine hierzu vorgesehene Anlage des Standes der Technik ist mit Hubstangen ausgerüstet, die von unten an den Flaschenböden außermittig angreifen und die Flaschen im Kasten leicht anheben, wobei aufgrund der exzentrischen Angriffspunkte der Hubstangen die im Randbereich des Kastens stehenden Flaschen leicht zur Mitte hin kippen, so daß die Bügelverschlüsse außer Eingriff mit den Griffleisten kommen. Anschließend können die Flaschen dann vom Packkopf erfasst und auf ein Transportband gestellt werden. Nachteilig bei diesem System ist es, daß die Kastenböden von unten her frei zugänglich sein müssen, um einen Durchgriff der Hubstangen zu ermöglichen.

Eine andere automatisch arbeitende Einrichtung ist mit Drehköpfen ausgerüstet, die über schräge Ebenen an den oberen Rändern der Flaschenköpfe angreifen und diese durch eine Abwärtsbewegung ausschließlich über Reibkraft in Drehung versetzen. Da hierbei ein sehr großer Druck auf die Flaschen ausgeübt wird, sind Beschädigungen an den Flaschen häufig, insbesondere dann, wenn die Flaschenböden geriffelt sind und sich dadurch einer Drehung widersetzen.

Das Dokument DE 198 33 807 A offenbart eine Vorrichtung gemäß dem Oberbegriff des Anspruchs 1, bei welcher die Drehung durch das Verhaken des Bügelverschlusses beim Herausheben der Flasche aus dem Kasten auftritt.

Der Erfindung liegt die Aufgabe zugrunde, eine Vorrichtung zur Drehausrichtung von Bügelverschlußflaschen in einem Kasten zur Verfügung zu stellen, die bei einfacher Ausbildung einen störungsfreien Betrieb mit großer Stückleistung sicherstellt.

Bei einer Vorrichtung der eingangs angegebenen Gattung wird diese Aufgabe erfindungsgemäß dadurch gelöst, daß die Drehköpfe mit einem gemeinsamen Drehantrieb für jeweils eine Teildrehung in der Größenordnung von 180° verbunden sind und an ihrem unteren, auf die Flaschenköpfe aufsetzbaren Ende zwei diametral gegenüberliegende Anschlagelemente aufweisen, deren gemeinsame Ebene mit dem benachbarten Rand der i. w. rechteckigen Grundplatte in ihrer vorbestimmbaren Endstellung einen Winkel bildet.

Mit Hilfe dieser Drehköpfe, die im Randbereich der Grundplatte vorgesehen sind, können alle entlang der Griffleisten des Kastens stehenden Flaschen mit Sicherheit so gedreht werden, daß nach der Teildrehung der Drehköpfe alle Bügelverschlüsse zum Kasteninneren hin weisen. Die beiden Anschlagelemente greifen dabei an den Metallbügeln der Bügelverschlüsse an und drehen die Bügelverschlüsse mit Fehlstellung aus dem Bereich der Griffleisten heraus, während bereits im Sinne der Erfindung "richtig" stehende Flaschen nur so weit gedreht werden, daß die Bügelverschlüsse nicht in die unter den Griffleisten liegende Randzone gelangen.

Eingehende Versuche haben gezeigt, daß die größtmögliche Sicherheit dann erreicht wird, wenn die Teildrehung bei etwa 165° liegt und der Winkel, den die Anschlagelemente zum Rand der Grundplatte bilden, zwischen 60° und 120° eingestellt werden kann.

Die Möglichkeit, die Endstellung der Anschlagelemente bei jedem Drehkopf definiert einstellen zu können, ist besonders wesentlich bei Kästen mit enger Flaschenstellung und an den Innenwänden ausgebildeten, vertikalen Versteifungsrippen, an denen die Bügelverschlüsse zur Anlage kommen können, was eine Weiterdrehung verhindert.

Wenn der Winkel der Anschlagelemente zum benachbarten Rand der Grundplatte eingestellt werden kann, ist es möglich, die Vorrichtung an die jeweiligen Kästen anzupassen. Da beispielsweise ein Kasten mit nur zwölf Flaschen weniger problematisch ist als ein Kasten mit 20 oder 24 Flaschen, die wesentlich enger im Kasten stehen, sollte die Ausgangsstellung jeweils benachbarter Drehköpfe unterschiedlich sein. Durch die unterschiedliche Wahl der Ausgangsstellung einander benachbarter Drehköpfe wird erreicht, daß deren Anschlagelemente die Flaschen zeitlich versetzt zueinander drehen, wodurch vermieden wird, daß sich die Bügelverschlüsse gegenseitig behindern.

Nach einem weiteren Merkmal der Erfindung kann der Drehzylinder aus einem unteren, die Anschlagelemente aufnehmenden Teil und einem oberen Teil zusammengesetzt sein, die relativ zueinander verdreht und festgestellt werden können. Dabei ist es vorteilhaft, wenn zwischen den unteren Teil und den oberen Teil des Drehzylinders eine Reibscheibe eingesetzt ist und die beiden Teile des Drehzylinders über einen Zugbolzen axial miteinander verspannt werden können. Mit diesen Maßnahmen ist es besonders einfach möglich, die Endstellung der Anschlagelemente für jeden Drehzylinder präzise einzustellen.

Die Anschlagelemente können aus flachen Anschlagplatten bestehen, welche in radial durchgehenden Schlitze am unteren Ende des Drehzylinders so befestigt sind, daß sie mit ihren radial gegenüberliegenden Innenrändern in eine nach unten offene Sackbohrung des Drehzylinders hineinragen.

Gemäß einer Variante der Erfindung können die beiden Anschlagelemente von einem gemeinsamen Sockel nach unten abstehen, der über Kuppelzapfen auswechselbar in eine Scheibe formschlüssig eingreift, die dreheinstellbar in der Sackbohrung des Drehzylinders befestigt ist. Um auch hier eine Feineinstellung der definierten Endstellung der Anschlagelemente zu ermöglichen, kann zwischen den Boden der Sackbohrung und die Scheibe eine Reibscheibe eingesetzt werden, wobei die Scheibe und die Reibscheibe über einen Zugbolzen axial miteinander verspannt werden.

In besonders vorteilhafter Weiterbildung der Erfindung ist vorgesehen, daß in der Sackbohrung des Drehkopfes oberhalb der Anschlagelemente ein Greiforgan zum Erfassen des Flaschenkopfes nach seiner Drehausrichtung angebracht ist. Damit wird die Möglichkeit eröffnet, die gesamte Grundplatte mit Drehköpfen auszurüsten und gleichzeitig entsprechend der Flaschenzahl mit Greiforganen zu kombinieren, um auf diese Weise zwei Arbeitsvorgänge nacheinander durchführen zu können, nämlich zunächst die Drehausrichtung der Flaschen und anschließend das Ausheben der ausgerichteten Flaschen aus dem Kasten und die Übergabe auf ein Transportband.

Die Greiforgane können hierbei aus einer handelsüblichen, elastischen Packtulpe bestehen, die im unteren Bereich des Drehkopfes eine Druckkammer begrenzt, welche über einen Druckluftkanal mit einer äußeren Druckluftquelle verbunden ist.

Weitere Merkmale und Vorteile der Erfindung ergeben sich aus den Schutzansprüchen und aus der folgenden Beschreibung von Ausführungsbeispielen, die in der Zeichnung dargestellt sind. Es zeigen:
Figur 1 eine schematische Draufsicht auf einen Flaschenkasten mit einer im Sinne der Erfindung zu korrigierenden Fehlstellung eines Bügelverschlusses,
Figur 2 die perspektivische Ansicht eines Kastens, der mit leeren Bügelverschlußflaschen gefüllt ist,
Figur 3 einen Längsschnitt durch einen erfindungsgemäß ausgebildeten Drehkopf,
Figur 4 eine Ansicht des Drehkopfes der Figur 3 von unten,
Figur 5 eine schematische Draufsicht auf die Grundplatte der Vorrichtung mit dem gemeinsamen Drehantrieb für die Drehköpfe für einen Kasten mit zwanzig Flaschen,
Figur 6 eine schematische Unteransicht der Grundplatte der Figur 5,
Figur 7 eine Weiterbildung des in Figur 3 gezeigten Drehkopfes,
Figur 8 eine um 90° gedrehte Ansicht des Drehzylinders des in Figur 7 dargestellten Drehkopfes,
Figur 9 eine bevorzugte Ausführungsform eines Drehkopfes mit integriertem Greiforgan,
Figur 10 den unteren Teil des Drehkopfes der Figur 9 beim Aufsetzen auf eine Flasche und
Figur 11 eine bezüglich Figur 10 und 90° gedrehte Darstellung beim Erfassen der ausgerichteten Flasche.

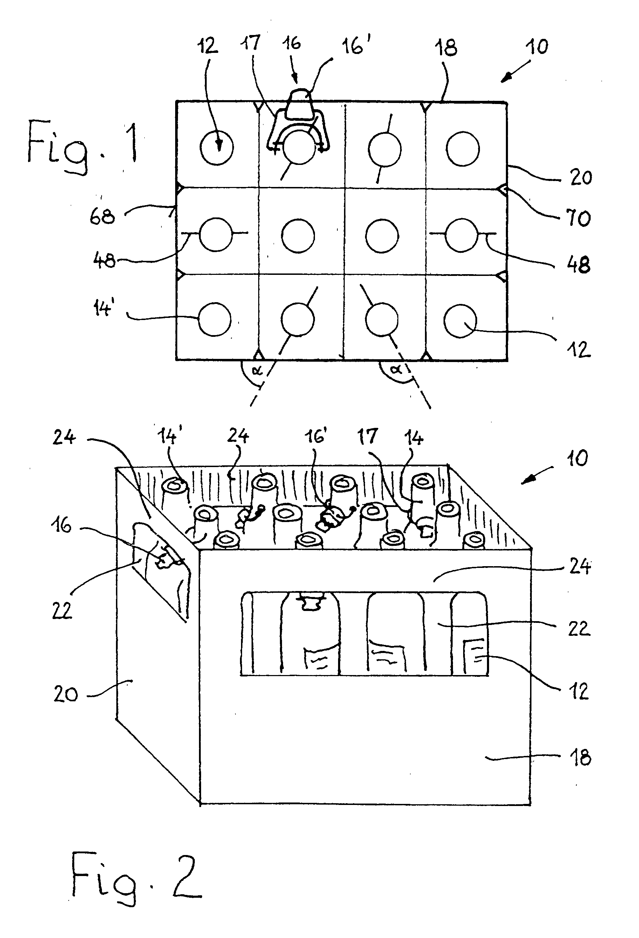

Die Figuren 1 und 2 zeigen einen aus Kunststoff hergestellten Kasten 10 zur Aufnahme von hier insgesamt zwölf Flaschen 12, wobei an jedem Flaschenhals 14 ein Bügelverschluß 16 angebracht ist. In den Figuren 1 und 2 sind aus Gründen der Vereinfachung nur einige Bügelverschlüsse 16 angedeutet. Jeder Bügelverschluß 16 hat einen Verschlußkörper 16', der über einen Metallbügel 17 am Flaschenhals 14 angelenkt ist.

Sowohl in den Längsseiten 18 als auch in den Schmalseiten 20 des Kastens 10 sind Aussparungen 22 eingearbeitet, wodurch an allen vier Seiten des Kastens 10 Griffleisten 24 gebildet werden. Unter diesen Griffleisten 24 können sich die Bügelverschlüsse 16 einzelner geöffneter Flaschen 12 mit ihren Verschlußkörpern 16' verhaken, wenn versucht wird, die Flaschen 12 in der beschriebenen Weise mittels eines Packkopfes gemeinsam nach oben auszuheben.

In Figur 1 ist ferner angedeutet, daß von der Innenwand der Längsseiten 18 und der Schmalseiten 20 vertikale Versteifungsrippen 70 abstehen.

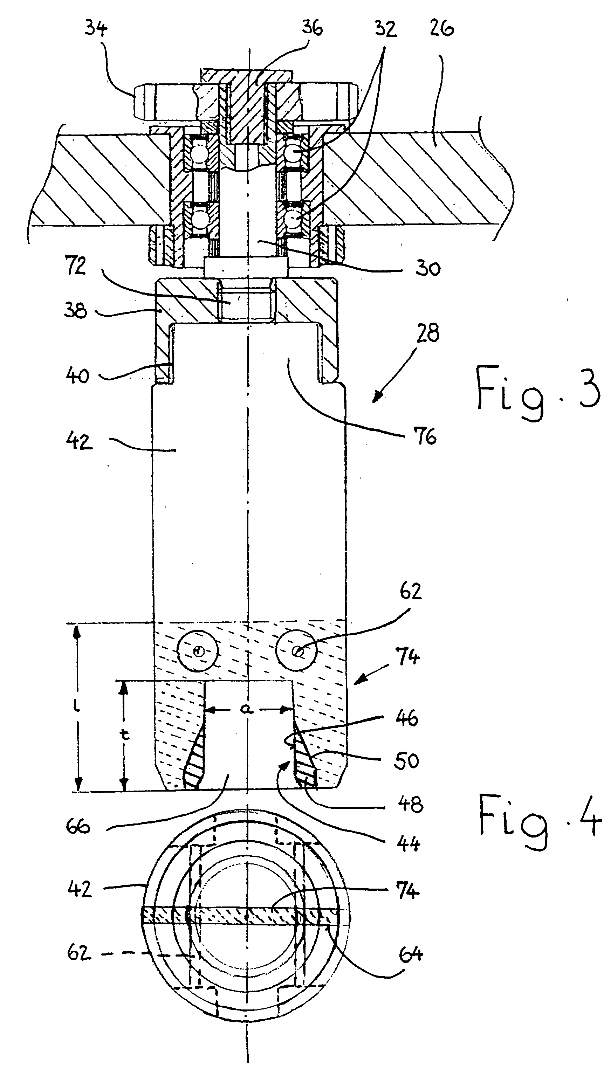

Eine Ausführungsform der Erfindung für die Drehausrichtung der Flaschen 12 ist in den Figuren 3 bis 6 dargestellt und weist eine rechteckige Grundplatte 26 auf, in deren Randbereichen mit gleichem Abstand voneinander Drehköpfe 28 angebracht sind. Jeder Drehkopf 28 hat an seinem oberen Ende eine Antriebswelle 30, die über Kugellager 32 in der Grundplatte 26 drehbar gelagert ist. An dem über die Grundplatte 26 hinausragenden Ende der Welle 30 ist ein Zahnrad 34 mittels einer Schraube 36 befestigt. Die Welle 30 hat an ihrem unteren Ende einen Gewindezapfen 72, auf den eine nach unten offene, zylindrische Büchse 38 aufgeschraubt ist. Diese hat ein Innengewinde 40, das entgegengesetzt zur jeweiligen Drehrichtung der Welle 30 ein Rechts- bzw. Linksgewinde ist. In das Innengewinde 40 ist ein Drehzylinder 42 aus einem schlag- und verschleißfesten, formbestädigen Kunststoff, z. B. POMC, fest eingeschraubt. In diesen sind von unten ein radial durchgehender Schlitz 64 mit der axialen Länge 1 sowie eine koaxiale Sackbohrung 66 mit dem Durchmesser a eingearbeitet. Die axiale Tiefe t der Sackbohrung 66 ist geringer als die Länge 1 des Schlitzes 64. In dem Schlitz 64 ist über Schrauben 62 eine in den Figuren 3 und 4 gestrichelt dargestellte, U-förmige Platte 74 befestigt, deren nach unten weisende Schenkel zwei diametral gegenüberliegende Anschlagelemente 44 (Anschlagplatten 48) bilden. Die lichte Weite zwischen beiden entspricht dem Durchmesser a der Sackbohrung 66 und ist etwas größer als der Durchmesser der Flaschenköpfe 14'. Die Innenränder 46 der beiden Anschlagplatten 48 ragen, wie Figur 3 weiter zeigt, in eine konisch erweiterte Aufsetzöffnung 50 der Sackbohrung 66 hinein und sind an ihrem unteren Ende angefast, um ein verkantungsfreies Aufsetzen auf die Flaschenköpfe 14' zu gewährleisten.

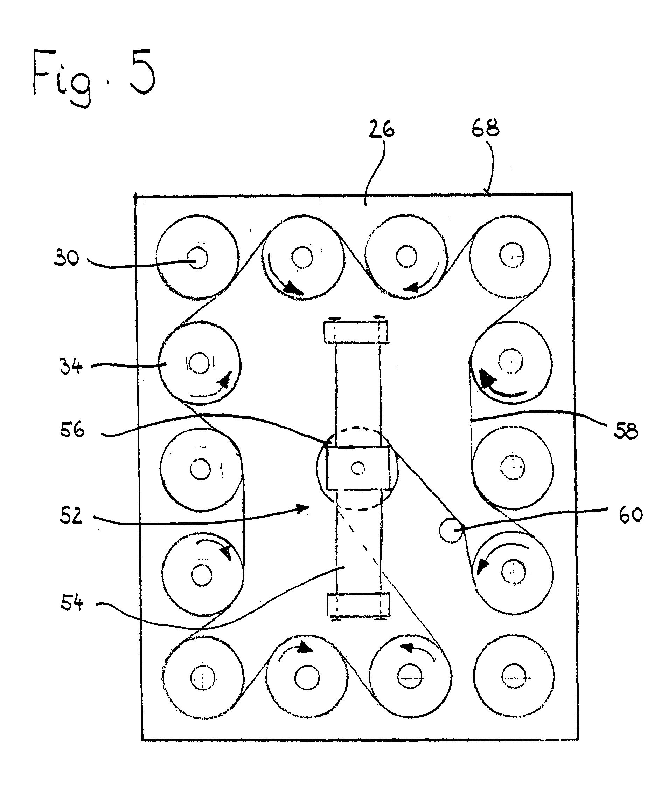

In Figur 5 ist der gemeinsame Drehantrieb 52 für die entlang der vier Ränder 68 der Grundplatte 26 gelagerten Drehköpfe 28 dargestellt. Dieser gemeinsame Drehantrieb 52 besteht hier aus einem doppelt wirkenden Pneumatikzylinder 54, der in nicht weiter dargestellter Weise über eine Zahnstange und ein Ritzel ein zentrales Antriebsrad 56 in Drehung versetzt. Das Antriebsrad 56 ist über eine Kette 58 mit den Zahnrädern 34 der Drehköpfe 28 verbunden. An der Kette 58 greift an einer Stelle ein Kettenspanner 60 an. Statt einer Kette kann auch ein Zahnriemen oder ein Keilriemen vorgesehen sein.

Anstelle des Kettenspanners 60 kann vorgesehen sein, den Pneumatikzylinder 54 in seiner Längsrichtung (und/oder Querrichtung) verstellbar zu lagern, um auf diese Weise die Kette 58 zu spannen.

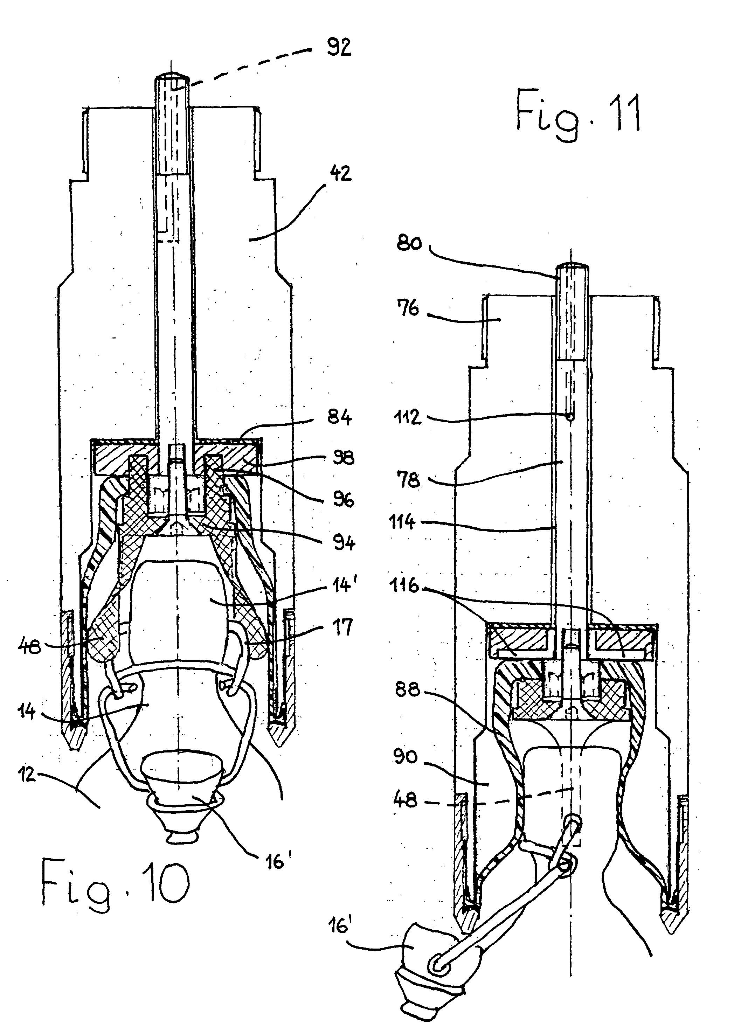

In Figur 1 ist angedeutet, daß die Anschlagplatten 48 jedes Drehkopfes 28 in ihrer vorbestimmten Ausgangsstellung zum benachbarten Rand 68 der Grundplatte 26 einen Winkel α bilden, der zwischen etwa 60° und 120° eingestellt werden kann. In dieser definierten Ausgangsstellung der Anschlagelemente 44 wird zu Beginn eines Ausdrehvorganges die Grundplatte 26 auf den Kasten 10 abgesenkt, bis die Anschlagelemente 44 mit Spiel über die Flaschenhälse 14 greifen. In der abgesenkten Position liegen die beiden Anschlagplatten 48 in Höhe des Metallbügels 17 der Bügelverschlüsse 16, deren Verschlußkörper 16' aufgrund seines Gewichtes nach unten hängt und von den weiter oben endenden Anschlagplatten 48 nicht mehr berührt wird. Diese Situation ist in der Variante der Figuren 10 und 11 deutlich sichtbar dargestellt. Sodann wird über den gemeinsamen Drehantrieb 52 an den Drehköpfen 28 eine Teildrehung von etwas weniger als 180°, beispielsweise 165°, erzeugt, die in Abhängigkeit von der Kettenführung im Uhrzeigersinn bzw. im Gegenuhrzeigersinn verläuft (vgl. Figur 5). Bei dieser Teildrehung werden die Verschlußkörper 16' aller erfaßten Bügelverschlüsse 16 aus dem Eingriffsbereich mit den Griffleisten 24 gedreht. Anschließend wird die Grundplatte 26 wieder angehoben, worauf der Pneumatikzylinder 54 die Drehköpfe 28 wieder in ihre Ausgangsstellung zurückdreht.

Die Einstellung des Winkels α kann durch eine Verdrehung des jeweiligen Zahnrades 34 relativ zu der Kette 58 vorgenommen werden. Für eine Feineinstellung dieses Winkels ist es auch möglich, die Büchse 38 auf dem Gewindezapfen 72 der Welle 30 zu verdrehen; die eingestellte Endposition kann danach durch eine radial gerichtete Feststellschraube gesichert werden.

Die Vorrichtung kann mit weiteren, gleich ausgebildeten Vorrichtungen zu einer Gruppe von zwei, drei oder mehr Vorrichtungen vereinigt werden, um gleichzeitig mehrere Kästen bearbeiten zu können. Ferner ist es möglich, die Vorrichtung mit eingangs erwähnten Packkopfeinheiten zu kombinieren, so daß diese die Kästen mit bereits ausgedrehten Flaschen ausheben können, während die in Transportrichtung nachgeordneten Drehköpfe einen Kasten für die Arbeit der Packköpfe vorbereiten.

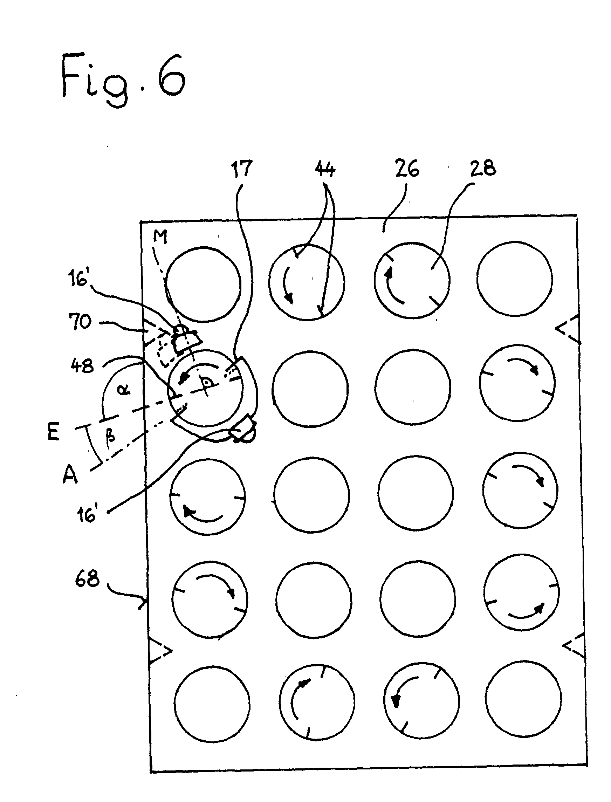

Figur 6 zeigt schematisch die Unteransicht einer Grundplatte 26 entsprechend der Darstellung der Figur 5, welche die Draufsicht zeigt. Die insgesamt zehn Drehköpfe 28 sind unter Angabe ihrer Ausdrehrichtungen und den definierten Endstellungen E der Anschlagelemente 44 eingezeichnet. Am Beispiel eines Drehkopfes 28 ist der Zusammenhang zwischen der Ausgangsstellung A und der Endstellung E der Anschlagelemente 44 verdeutlicht. Da unmittelbar neben diesem Drehkopf 28 von der Innenwand des Kastens eine vertikale Versteifungsrippe 70 (gestrichelt eingezeichnet) absteht, muß sichergestellt werden, daß die Endstellung E so gewählt ist, daß auch im ungünstigsten Fall der Verschlußkörper 16' eines Bügelverschlusses 16 nicht über die Versteifungsrippe 70 hinaus verdreht werden kann. Diese Bedingung wird durch die eingezeichnete Endstellung E erfüllt, in der die Mittelachse M des Verschlußkörpers 16' rechtwinklig auf der Verbindungslinie zwischen den beiden Anschlagelementen 44 in der Endstellung E steht. Wenn der Winkel β zwischen der Endstellung E und der Ausgangsstellung A etwa 15° beträgt, würden in der eingezeichneten, ungünstigsten Position einer Flasche mit Bügelverschluß 16 die Anschlagelemente 44 in der punktiert eingezeichneten Ausgangsstellung A den Metallbügel 17 erfassen und um etwa 165° (180° - β) in die Endstellung E drehen, in der der durchgehend dargestellte Verschlußkörper 16' vor einer Berührung mit der Versteifungsrippe 70 zum Stehen kommt. Wenn anstelle der Teildrehung von hier 165° eine Halbdrehung von 180° durchgeführt würde, wäre die Endstellung des Verschlußkörpers 16' (gestrichelt eingezeichnet) im Bereich der Versteifungsrippe 70, was im ungünstigsten Fall zu einem Flaschenbruch führen würde.

Aus diesen Erläuterungen ergibt sich, daß die definierten Endstellungen E alle Drehköpfe 28 von dem jeweils verwendeten Kastentyp abhängen. Erkennbar ist schließlich auch, daß der Winkel α zwischen jeweils zwei benachbarten Drehköpfen 28 unterschiedlich ist, so daß die Metallbügel 17 zweier benachbarter Flaschen zeitversetzt von den Anschlagelementen 44 erfasst und gedreht werden, wodurch gegenseitige Berührungen der Verschlußkörper 16' vermieden werden.

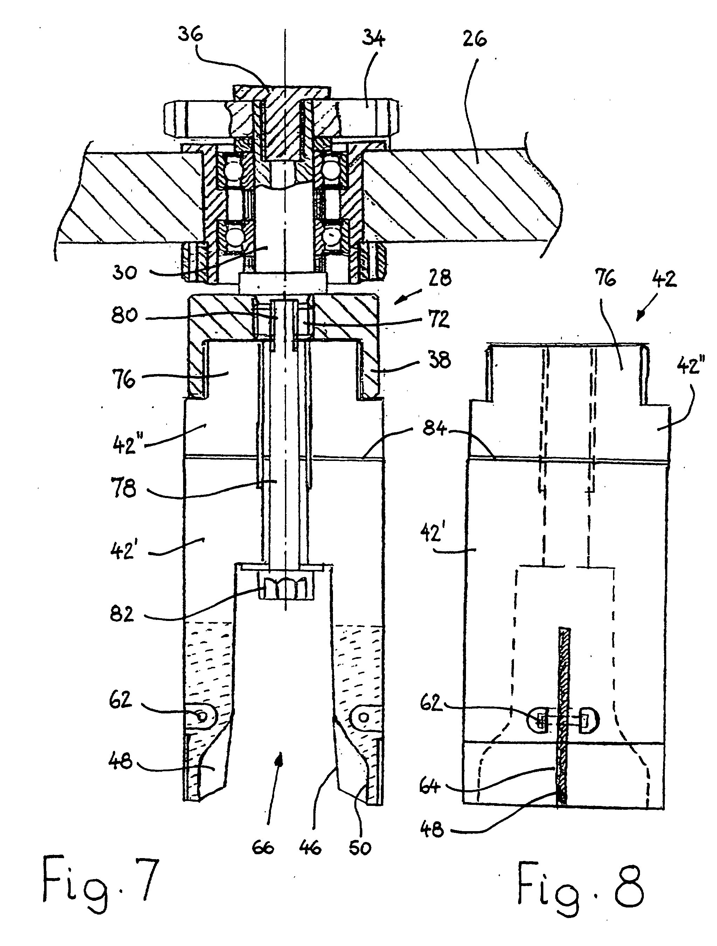

Die Figuren 7 und 8 zeigen eine Variante eines Drehkopfes 28, bei welchem der Drehzylinder 42 zweiteilig ausgebildet ist und aus einem unteren, die Anschlagelemente 44 aufnehmenden Teil 42' und einem oberen Teil 42'' zusammengesetzt ist. Der obere Teil 42'' hat, ähnlich wie im Beispiel der Figur 3, an seinem oberen Ende einen Gewindeansatz 76, der in die Büchse 38 eingeschraubt ist, welche auf den Gewindezapfen 72 der Antriebswelle 30 aufgeschraubt ist.

Der untere Teile 42' des Drehzylinders 42 trägt die beiden radial zueinander ausgerichteten Anschlagplatten 48, die hier nicht zusammenhängen, sondern einzeln ausgebildet sind und in jeweils einem Schlitz 64 am unteren Ende des Teils 42' sitzen, in welchem sie über Schrauben 62 festgeklemmt sind. Der untere Teil 42' des Drehzylinders 42 ist über einen Zugbolzen 78 fixiert, dessen Gewindeende 80 in eine Gewindebohrung des Gewindezapfens 72 eingeschraubt ist. Der Zugbolzen 78 hat am unteren Ende einen Kopf 82, der durch die Sackbohrung 66 hindurch mittels eines Innensechskantschlüssels verdreht werden kann.

Zwischen den unteren Teil 42' und den oberen Teil 42'' des Drehzylinders 42 ist eine Reibscheibe 84 eingesetzt. Wenn der Zugbolzen 78 leicht gelöst worden ist, läßt sich der untere Teil 42' verdrehen, um die Winkelstellung der beiden Anschlagplatten 48 einzustellen. Anschließend wird der Zugbolzen 78 wieder festgezogen, um die beiden Teile des Drehzylinders 42 axial miteinander zu verspannen; dabei sorgt die Reibscheibe 84 für eine verdrehfeste Kupplung zwischen den beiden Teilen 42' und 42''.

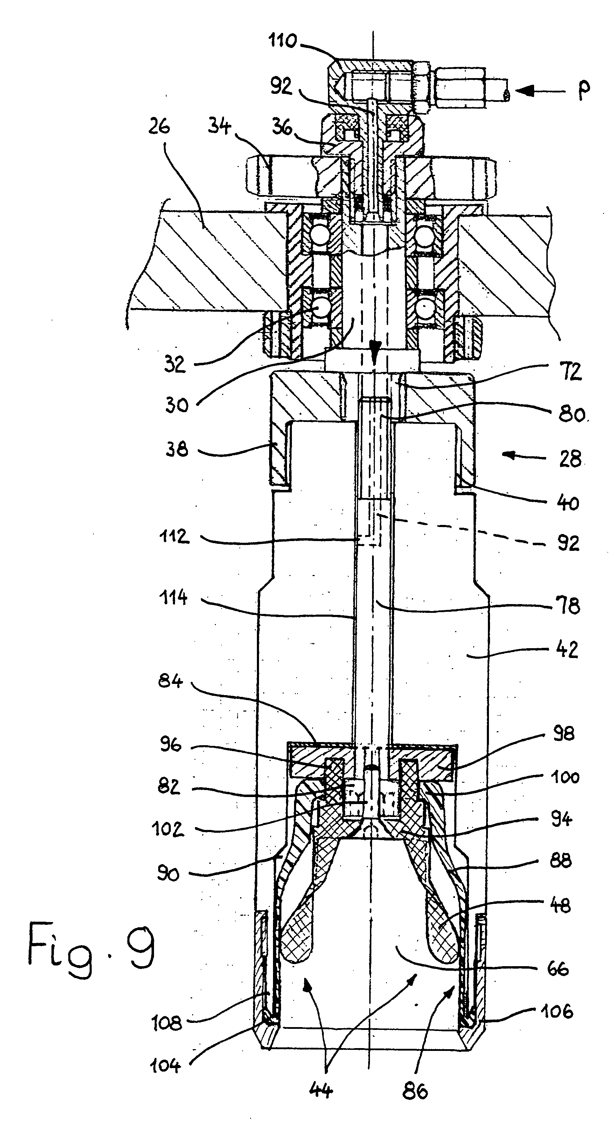

Die Figuren 9 bis 11 zeigen ein weiteres, bevorzugtes Ausführungsbeispiel eines Drehkopfes 28, in dessen Drehzylinder 42 ein Greiforgan 86 integriert ist, mit dem ein Flaschenkopf 14' nach seiner Drehausrichtung erfasst werden kann. Das Greiforgan 86 besteht aus einer elastischen Packtulpe 88, die handelsüblich ist und beispielsweise aus PE besteht. Die Packtulpe 88 ist im unteren Bereich des Drehzylinders 82 befestigt, wo sie eine Druckkammer 90 begrenzt, welche über einen Druckluftkanal 92 mit einer äußeren Druckluftquelle verbunden ist.

Bei diesem Ausführungsbeispiel stehen die beiden Anschlagelemente 44 (Anschlagplatten 48) von einem gemeinsamen, scheibenförmigen Sockel 94 nach unten ab (in den Figuren 9 bis 11 kreuzweise schraffiert), der über zwei Kuppelzapfen 96 in eine Scheibe 98 formschlüssig eingreift. Zwischen die Scheibe 98 und den Boden der Sackbohrung 66 ist eine Reibscheibe 84 eingesetzt, die dieselbe Funktion wie die Reibscheibe 84 im Ausführungsbeispiel der Figuren 7 und 8 hat. Die Scheibe 98 wird durch den Kopf 82 des Zugbolzens 78 über die Reibscheibe 84 gegen den Boden der Sackbohrung 66 gedrückt.

Zwischen der Scheibe 98 und dem Sockel 94 der Anschlagelemente 44 ist der Boden 100 der Packtulpe 88 eingeklemmt. Hierzu dient eine Senkschraube 102, die in ein Gewinde des Kopfes 82 des Zugbolzens 78 eingeschraubt ist. Die Senkschraube 102 kann durch die Sackbohrung 66 hindurch leicht gelöst werden, um bei Bedarf die Anschlagelemente 44 auszutauschen. Mittels der beiden Kuppelzapfen 96 können die ausgewechselten Anschlagelemente 44 in ihrer definierten Winkelstellung wieder in der Scheibe 98 fixiert werden.

Bei herausgedrehter Senkschraube 102 kann auch der Zugbolzen 78 gelöst werden, so daß die Scheibe 98 zum Einstellen der Winkelstellung der beiden Anschlagelemente 44 verdreht werden kann. Anschließend wird der Zugbolzen 78 über sein Gewindeende 80 wieder festgezogen.

Um bei Bedarf die Packtulpe 88 auszuwechseln, genügt es, die Senkschraube 102 zu lösen, um die Anschlagelemente 44 mit ihrem gemeinsamen Sockel 94 aus der Sackbohrung 66 herauszuziehen; anschließend läßt sich auch die Packtulpe 88 entfernen.

Der nach unten gerichtete Rand 104 der Packtulpe 88 ist am unteren Ende des Drehzylinders 42 durch eine Überwurfmutter 106 druckdicht befestigt. Die Überwurfmutter 106 besteht vorzugsweise aus Messing und sorgt nicht nur für einen luftdichten Abschluß der Druckkammer 90, sondern dient auch zur Versteifung des verhältnismäßig dünnen unteren Randes 108 des Drehzylinders 42. Das untere Ende der Überwurfmutter 106 ist konisch ausgebildet, wodurch einerseits ein präzises Aufsetzen des Drehkopfes 28 auf die Flaschenköpfe 14' und andererseits ein störungsfreies Überwinden von sehr engen Randleisten eines Kastens 10 gewährleistet werden.

Wie Figur 9 zeigt, ist auf das obere Ende der Antriebswelle 30 ein Winkelanschlußelement 110 aufgesetzt, das eine Relativdrehung des Zahnrades 34 erlaubt. Über das Winkelanschlußelement 110 wird Druckluft mit einem Druck p von etwa 2 bar zugeführt, die anschließend über die hohle Antriebswelle 30 in den Druckluftkanal 42 des Zugbolzens 78 strömt. Etwa im oberen Drittel des Zugbolzens 78 gelangt die Druckluft über eine Radialbohrung 112 in den Ringraum 114 zwischen der zentralen Bohrung des Drehzylinders 42 und dem Zugbolzen 78. Wie Figur 11 zeigt, strömt die Druckluft anschließend über zwei Luftleitkanäle 116, die in die Scheibe 98 eingearbeitet sind, in die Druckkammer 90. Dadurch wird die Packtulpe 88 an mehreren Stellen des Umfangs gegen den Flaschenkopf 14' gedrückt, der zuvor durch die beiden Anschlagplatten 48 in die Ausdrehstellung gedreht worden war. In dieser Stellung kann nun die Flasche 12 zusammen mit allen anderen Flaschen aus dem Kasten 10 herausgehoben und auf ein Transportband gestellt werden.

Bei der Abgabe der Flaschen auf das Transportband wird die Druckkammer 90 drucklos geschaltet; anschließend werden die Anschlagelemente 44 wieder in ihre Ausgangsstellung A zurückgedreht, so daß die Drehköpfe 28 auf einen weiteren Kasten mit auszudrehenden Flaschen abgesenkt werden können.

Aus den Figuren 4 und 5 geht hervor, daß in den vier Eckbereichen der Grundplatte 26 und im inneren Bereich der Grundplatte 26, wo keine bevorzugte Winkelstellung der Flaschen herbeigeführt werden muß, keine Drehköpfe 28 angebracht sind, sondern lediglich an sich bekannte Packelemente mit den beschriebenen Packtulpen 88.

## Patentansprüche

1. Vorrichtung zur Drehausrichtung von Flaschen (12) mit geöffnetem Bügelverschluß (16) in einem Kasten (10), umfassend eine vertikal nach oben und unten bewegliche, i.w. rechteckige Grundplatte (26), in der auf die Flaschenköpfe (14') aufsetzbare Drehköpfe (28) in gleichmäßigen Abständen voneinander gelagert sind, **dadurch gekennzeichnet, daß** die Drehköpfe (28) mit einem gemeinsamen Drehantrieb (52) für jeweils eine Teildrehung in der Größenordnung von 180° verbunden sind und an ihrem unteren, auf die Flaschenköpfe (14') aufsetzbaren Ende zwei diametral gegenüberliegende Anschlagelemente (44) aufweisen, deren gemeinsame Ebene mit dem benachbarten Rand (68) der i.w. rechteckigen Grundplatte (26) in ihrer vorbestimmbaren Endstellung einen Winkel (α) bildet.

2. Vorrichtung nach Anspruch 1, **dadurch gekennzeichnet, daß** die Teildrehung etwa bei 165° liegt.

3. Vorrichtung nach Anspruch 1 oder 2, **dadurch gekennzeichnet, daß** der gemeinsame Drehantrieb (52) für die Drehköpfe (28) nach der Teildrehung eine Rückdrehung der Drehköpfe (28) in die Ausgangsstellung erzeugt.

4. Vorrichtung nach einem der vorhergehenden Ansprüche, **dadurch gekennzeichnet, daß** der Winkel (α) zwischen 60° und 120° einstellbar ist.

5. Vorrichtung nach Anspruch 4, **dadurch gekennzeichnet, daß** der Winkel (α) jeweils zwei benachbarter Drehköpfe (28) unterschiedlich ist.

6. Vorrichtung nach einem der vorhergehenden Ansprüche, **dadurch gekennzeichnet, daß** der gemeinsame Drehantrieb (52) einen doppelt wirkenden Pneumatikzylinder (54) aufweist.

7. Vorrichtung nach Anspruch 6, **dadurch gekennzeichnet, daß** der Pneumatikzylinder (54) mit einem Antriebsrad (56) verbunden ist, das Teil eines Ketten- oder Riementriebs (58) ist, der mit Zahn- bzw. Riemenscheiben (34) der Drehköpfe (28) verbunden ist.

8. Vorrichtung nach Anspruch 6 oder 7, **dadurch gekennzeichnet, daß** der Pneumatikzylinder (54) in Längs- und/oder Querrichtung verstellbar an der Grundplatte (26) befestigt ist.

9. Vorrichtung nach einem der vorhergehenden Ansprüche, **dadurch gekennzeichnet, daß** die Anschlagelemente (44) in einer nach unten offenen Sackbohrung (66) eines Drehzylinders (42) angebracht sind, der den unteren Bereich des Drehkopfes (28) bildet.

10. Vorrichtung nach Anspruch 9, **dadurch gekennzeichnet, daß** die Sackbohrung (66) in eine nach unten konisch erweiterte Aufsetzöffnung (50) übergeht.

11. Vorrichtung nach Anspruch 10, **dadurch gekennzeichnet, daß** die beiden Anschlagelemente (44) jedes Drehkopfes (28) als flache Anschlagplatten (48) ausgebildet sind.

12. Vorrichtung nach Anspruch 11, **dadurch gekennzeichnet, daß** die beiden Anschlagplatten (48) in einem radial durchgehenden Schlitz (64) am unteren Ende des Drehzylinders (42) so befestigt sind, daß sie mit ihren radial gegenüberliegenden Innenrändern (46) in die konisch erweiterte Aufsetzöffnung (50) hineinragen.

13. Vorrichtung nach einem der Ansprüche 9 bis 12, **dadurch gekennzeichnet, daß** der Drehzylinder (42) an seinem oberen Ende einen Gewindeansatz (76) aufweist, der in eine Büchse (38) eingeschraubt ist, die am unteren Ende einer mit dem Drehantrieb (52) verbundenen Antriebswelle (30) befestigt ist.

14. Vorrichtung nach einem der Ansprüche 9 bis 13, **dadurch gekennzeichnet, daß** der Drehzylinder (42) aus einem unteren, die Anschlagelemente (44) aufnehmenden Teil (42') und einem oberen Teil (42'') zusammengesetzt ist, die relativ zueinander verdrehbar und feststellbar sind.

15. Vorrichtung nach Anspruch 14, **dadurch gekennzeichnet, daß** zwischen den unteren Teil (42') und den oberen Teil (42'') des Drehzylinders (42) eine Reibscheibe (84) eingesetzt ist und daß die beiden Teile (42', 42'') des Drehzylinders (42) über einen Zugbolzen (78) axial miteinander verspannbar sind.

16. Vorrichtung nach einem der Ansprüche 9 bis 11, **dadurch gekennzeichnet, daß** die beiden Anschlagelemente (44) von einem gemeinsamen Sockel (94) nach unten abstehen, der über Kuppelzapfen (96) auswechselbar in eine Scheibe (98) formschlüssig eingreift, die dreheinstellbar in der Sackbohrung (66) des Drehzylinders (42) befestigt ist.

17. Vorrichtung nach Anspruch 16, **dadurch gekennzeichnet, daß** zwischen den Boden der Sackbohrung (66) und die Scheibe (98) eine Reibscheibe (84) eingesetzt ist und daß die Scheibe (98) und die Reibscheibe (84) über einen Zugbolzen (78) axial miteinander verspannbar sind.

18. Vorrichtung nach einem der vorhergehenden Ansprüche 9-17, **dadurch gekennzeichnet, daß** in der Sackbohrung (66) des Drehkopfes (28) oberhalb der Anschlagelemente (44) ein Greiforgan (86) zum Erfassen des Flaschenkopfes (14') nach seiner Drehausrichtung angebracht ist.

19. Vorrichtung nach Anspruch 18, **dadurch gekennzeichnet, daß** das Greiforgan (86) aus einer elastischen Packtulpe (88) besteht, die im unteren Bereich des Drehkopfes (28) eine Druckkammer (90) begrenzt, welche über einen Druckluftkanal (92) mit einer äußeren Druckluftquelle verbunden ist.

20. Vorrichtung nach Anspruch 19, **dadurch gekennzeichnet, daß** der Boden (100) der Packtulpe (88) zwischen der Scheibe (98) und dem Sockel (94) der Anschlagelemente (44) eingeklemmt ist.

21. Vorrichtung nach Anspruch 20, **dadurch gekennzeichnet, daß** in die Scheibe (98) Luftleitkanäle (116) eingearbeitet sind, die eine Verbindung zwischen der Druckkammer (90) der Packtulpe (88) und dem durch den zentralen Zugbolzen (78) verlaufenden Druckluftkanal (92) herstellen.

22. Vorrichtung nach Anspruch 20 oder 21, **dadurch gekennzeichnet, daß** der Sockel (94) der beiden Anschlagelemente (44) mittels einer Schraube (102) lösbar am nach unten weisenden, die Scheibe (98) haltenden Kopf (82) des Zugbolzens (78) befestigt ist.

23. Vorrichtung nach einem der Ansprüche 19 bis 22, **dadurch gekennzeichnet, daß** ein nach unten gerichteter Rand (104) der Packtulpe (88) am unteren Ende des Drehkopfes (28) durch eine Überwurfmutter (106) druckdicht befestigt ist.

24. Vorrichtung nach einem der vorhergehenden Ansprüche, **dadurch gekennzeichnet, daß** wenigstens der innere Bereich der Grundplatte (26), der keine Drehköpfe (28) aufweist, mit Greiforganen (86) bestückt ist.

## Claims

1. A device for rotationally orienting bottles (12) with an open swing-top closure (16) in a crate (10), comprising a substantially rectangular mounting plate (26) which is vertically movable upwards and downwards and in which rotary heads (28), which may be placed on the bottle heads (14), are mounted at uniform spacings from one another, **characterised in that** the rotary heads (28) are connected to a common rotary drive (52) for respective partial rotation in the order of magnitude of 180° and have at their lower ends, which may be placed on the bottle heads (14'), two diametrically opposed stop elements (44) whereof the common plane forms an angle (α) with the adjacent edge (68) of the substantially rectangular mounting plate (26) in its predeterminable end position.

2. A device according to Claim 1, **characterised in that** the partial rotation is approximately 165°.

3. A device according to Claim 1 or 2, **characterised in that**, after the partial rotation, the common rotary drive (52) for the rotary heads (28) generates a reverse rotation of the rotary heads (28) into the starting position.

4. A device according to one of the preceding claims, **characterised in that** the angle (α) may be set between 60° and 120°.

5. A device according to Claim 4, **characterised in that** the respective angles (α) between two adjacent rotary heads (28) are different.

6. A device according to one of the preceding claims, **characterised in that** the common rotary drive (52) has a double-acting pneumatic cylinder (54).

7. A device according to Claim 6, **characterised in that** the pneumatic cylinder (54) is connected to a drive wheel (56) which is part of a chain or belt drive (58) respectively connected to toothed discs or belt pulleys (34) of the rotary heads (28).

8. A device according to Claim 6 or 7, **characterised in that** the pneumatic cylinder (54) is mounted on the mounting plate (26) such that it is adjustable in the longitudinal and/or transverse direction.

9. A device according to one of the preceding claims, **characterised in that** the stop elements (44) are mounted in a downwardly open blind bore (66) in a rotary cylinder (42) forming the lower region of the rotary head (28).

10. A device according to Claim 9, **characterised in that** the blind bore (66) merges into a receiving opening (50) which is conically widened in the downward direction.

11. A device according to Claim 10, **characterised in that** the two stop elements (44) of each rotary head (28) are constructed as flat stop plates (48).

12. A device according to Claim 11, **characterised in that** the two stop plates (48) are mounted in a radially continuous slot (64) at the lower end of the rotary cylinder (42) such that they project into the conically widened receiving opening (50) with their radially opposing inner edges (46).

13. A device according to one of Claims 9 to 12, **characterised in that** the rotary cylinder (42) has, at its upper end, a threaded projection (76) which is screwed into a bush (38) mounted at the lower end of a drive shaft (30) connected to the rotary drive (52).

14. A device according to one of Claims 9 to 13, **characterised in that** the rotary cylinder (42) is composed of a lower part (42') receiving the stop elements (44) and an upper part (42"), which may be twisted relative to one another and fixed in position.

15. A device according to Claim 14, **characterised in that** a friction disc (84) is inserted between the lower part (42') and the upper part (42") of the rotary cylinder (42) and **in that** the two parts (42', 42") of the rotary cylinder (42) may be braced axially together by way of a tie bolt (78).

16. A device according to one of Claims 9 to 11, **characterised in that** the two stop elements (44) project downwards from a common holder (94) which engages with form fit in a disc (98) such that it is exchangeable by way of coupling pins (96), said disc being mounted in the blind bore (66) of the rotary cylinder (42) such that it is rotationally adjustable.

17. A device according to Claim 16, **characterised in that** a friction disc (84) is inserted between the bottom of the blind bore (66) and the disc (98) and **in that** the disc (98) and the friction disc (84) may be braced axially together by way of a tie bolt (78).

18. A device according to one of the preceding claims 9-17, **characterised in that** a gripping member (86) for gripping the bottle head (14') after its rotational orientation is mounted in the blind bore (66) of the rotary head (28) above the stop elements (44).

19. A device according to Claim 18, **characterised in that** the gripping member (86) comprises a resilient bell-shaped packing element (88) which delimits a pressure chamber (90) in the lower region of the rotary head (28), said pressure chamber being connected to an external compressed-air source by way of a compressed-air channel (92).

20. A device according to Claim 19, **characterised in that** the base (100) of the bell-shaped packing element (88) is braced between the disc (98) and the holder (94) for the stop elements (44).

21. A device according to Claim 20, **characterised in that** air conduits (116) are incorporated in the disc (98), which form a connection between the pressure chamber (90) of the bell-shaped packing element (88) and the compressed-air channel (92) extending through the central tie bolt (78).

22. A device according to Claim 20 or 21, **characterised in that** the holder (94) for the two stop elements (44) is detachably mounted on the downwardly pointing head (82) of the tie bolt (78) by means of a screw (102), said head (82) holding the disc (98).

23. A device according to one of Claims 19 to 22, **characterised in that** a downwardly directed edge (104) of the bell-shaped packing element (88) is mounted in pressure-tight manner at the lower end of the rotary head (28) by means of a union nut (106).

24. A device according to one of the preceding claims, **characterised in that** at least the inner region of the mounting plate (26), which has no rotary heads (28), is equipped with gripping members (86).

## Revendications

1. Dispositif d'orientation en rotation de bouteilles (12) avec fermeture à étrier ouverte (16) placées dans une caisse (10), comprenant une plaque de base (26) mobile verticalement vers le haut et vers le bas et essentiellement rectangulaire, dans laquelle des têtes rotatives (28) posables sur les têtes de bouteille (14') sont montées à écartements réguliers, **caractérisé en ce que** les têtes rotatives (28) sont reliées à un entraînement de rotation commun (52), pour respectivement une rotation partielle de l'ordre de 180°, et présentent à leur extrémité inférieure posable sur les têtes de bouteille (14') deux éléments de butée (44) diamétralement opposés, dont le plan commun forme un angle (α) avec le bord voisin (68) de la plaque de base essentiellement rectangulaire (26) dans sa position finale prédéfinissable.

2. Dispositif selon la revendication 1, **caractérisé en ce que** la rotation partielle est d'environ 165°.

3. Dispositif selon la revendication 1 ou 2, **caractérisé en ce que** l'entraînement de rotation commun (52) pour les têtes rotatives (28) engendre après la rotation partielle une rotation inverse des têtes rotatives (28) jusque dans la position initiale.

4. Dispositif selon l'une des revendications précédentes, **caractérisé en ce que** l'angle (α) est réglable entre 60° et 120°.

5. Dispositif selon la revendication 4, **caractérisé en ce que** l'angle (α) de respectivement deux têtes rotatives voisines (28) est différent.

6. Dispositif selon l'une des revendications précédentes, **caractérisé en ce que** l'entraînement de rotation commun (52) présente un cylindre pneumatique (54) à double effet.

7. Dispositif selon la revendication 6, **caractérisé en ce que** le cylindre pneumatique (54) est relié à une roue d'entraînement (56) faisant partie d'un entraînement par chaîne ou par courroie (58), qui est relié aux rondelles crantées ou aux poulies (34) des têtes rotatives (28).

8. Dispositif selon la revendication 6 ou 7, **caractérisé en ce que** le cylindre pneumatique (54) est fixé à la plaque de base (26) de telle sorte qu'il est réglable dans le sens longitudinal et/ou transversal.

9. Dispositif selon l'une des revendications précédentes, **caractérisé en ce que** les éléments de butée (44) sont montés dans un trou borgne (66), ouvert vers le bas, d'un cylindre rotatif (42) qui constitue la zone inférieure de la tête rotative (28).

10. Dispositif selon la revendication 9, **caractérisé en ce que** le trou borgne (66) se transforme en un orifice de contact (50) évasé en cône vers le bas.

11. Dispositif selon la revendication 10, **caractérisé en ce que** les deux éléments de butée (44) de chaque tête rotative (28) sont conçus comme des plaques de butée plates (48).

12. Dispositif selon la revendication 11, **caractérisé en ce que** les deux plaques de butée (48) sont fixées dans une fente (64) radialement continue située à l'extrémité inférieure du cylindre rotatif (42), de telle sorte qu'elles dépassent, avec leurs bords intérieurs (46) radialement opposés, dans l'orifice de contact (50) évasé en cône.

13. Dispositif selon l'une des revendications 9 à 12, **caractérisé en ce que** le cylindre rotatif (42) présente à son extrémité supérieure un téton fileté (76), qui est vissé dans une douille (38) fixée à l'extrémité inférieure d'un arbre d'entraînement (30) relié à l'entraînement de rotation (52).

14. Dispositif selon l'une des revendications 9 à 13, **caractérisé en ce que** le cylindre rotatif (42) est composé d'une partie inférieure (42') contenant les éléments de butée (44) et d'une partie supérieure (42''), qui sont orientables et verrouillables l'une par rapport à l'autre.

15. Dispositif selon la revendication 14, **caractérisé en ce qu'**un disque de friction (84) est inséré entre la partie inférieure (42') et la partie supérieure (42'') du cylindre rotatif (42), et que les deux parties (42', 42") du cylindre rotatif (42) sont serrables ensemble axialement par l'intermédiaire d'un boulon tirant (78).

16. Dispositif selon l'une des revendications 9 à 11, **caractérisé en ce que** les deux éléments de butée (44) partent, vers le bas, d'un socle commun (94) qui s'engrène solidairement dans un disque (98) de façon amovible au moyen de tourillons d'accouplement (96), le disque (98) étant fixé dans le trou borgne (66) du cylindre rotatif (42) de façon réglable en rotation.

17. Dispositif selon la revendication 16, **caractérisé en ce qu'**un disque de friction (84) est inséré entre le fond du trou borgne (66) et le disque (98), et que le disque (98) et le disque de friction (84) sont serrables ensemble axialement par l'intermédiaire d'un boulon tirant (78).

18. Dispositif selon l'une des revendications précédentes 9 à 17, **caractérisé en ce qu'**un organe préhenseur (86) est monté dans le trou borgne (66) de la tête rotative (28), au-dessus des éléments de butée (44), pour saisir la tête de bouteille (14') après son orientation en rotation.

19. Dispositif selon la revendication 18, **caractérisé en ce que** l'organe préhenseur (86) est constitué d'une membrane de préhension élastique (88) qui limite, dans la zone inférieure de la tête rotative (28), une chambre sous pression (90) reliée à une source d'air comprimé extérieure par un canal d'air comprimé (92).

20. Dispositif selon la revendication 19, **caractérisé en ce que** le fond (100) de la membrane de préhension (88) est serré entre le disque (98) et le socle (94) des éléments de butée (44).

21. Dispositif selon la revendication 20, **caractérisé en ce que** dans le disque (98) sont façonnés dés canaux conducteurs d'air (116), qui créent une liaison entre la chambre sous pression (90) de la membrane de préhension (88) et le canal d'air comprimé (92) passant par le boulon tirant central (78).

22. Dispositif selon la revendication 20 ou 21, **caractérisé en ce que** le socle (94) des deux éléments de butée (44) est fixé par une vis (102), de façon détachable, à la tête (82) du boulon tirant (78) qui est dirigée vers le bas et maintient le disque (98).

23. Dispositif selon l'une des revendications 19 à 22, **caractérisé en ce qu'**un bord (104) de la membrane de préhension (88) dirigé vers le bas est fixé à l'extrémité inférieure de la tête rotative (28) par un écrou-raccord (106) de façon étanche à la pression.

24. Dispositif selon l'une des revendications précédentes, **caractérisé en ce qu'**au moins la zone intérieure de la plaque de base (26), qui ne présente pas de têtes rotatives (28), est munie d'un organe préhenseur (86).
